(19)

Europäisches
Patentamt
European
Patent Office
Office européen
des brevets

(11) EP 2 637 294 A2

(12) EUROPEAN PATENT APPLICATION

(43) Date of publication:
11.09.2013 Bulletin 2013/37

(51) Int Cl.:
H02M 3/335 (2006.01)

(21) Application number: 13156778.6

(22) Date of filing: 26.02.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 09.03.2012 JP 2012053525

(71) Applicant: Canon Kabushiki Kaisha
Tokyo 146-8501 (JP)

(72) Inventors:
• Nakajima, Yuki
Tokyo, Tokyo 146-8501 (JP)
• Hayasaki, Minoru
Tokyo, Tokyo 146-8501 (JP)

(74) Representative: TBK
Bavariaring 4-6
80336 München (DE)

(54) **Power supply device and image forming apparatus**

(57)    The power supply device includes a transformer, a switching unit for driving a primary side of the transformer, a control unit for outputting a pulse signal to the switching unit to control a switching operation including a period during which the switching unit is active and a period during which the switching unit is inactive, in order to output predetermined electric power from a secondary side of the transformer, and an output control unit for continuously outputting a pulse signal to the control unit in the period during which the switching unit is active, at a predetermined cycle shorter than the period during which the switching unit is inactive.

## FIG. 1

EP 2 637 294 A2

**Description**

BACKGROUND OF THE INVENTION

Field of the Invention

The present invention relates to a power supply device and an image forming apparatus, and more particularly, to a DC/DC converter.

Description of the Related Art

In recent years, in view of demands for a power-saving device in various electronic devices, further power saving is required also for a power supply of the electronic devices. As an example of the power supply of the electronic devices, there is used a switching-mode power supply (hereinafter referred to as switching power supply) for outputting a target voltage by driving and turning ON and OFF a switching element such as a field effect transistor (FET) at a predetermined frequency. In some types of the switching power supply, the number of switching operations of the switching element is reduced in a power-saving operation (referred to also as light load operation) to improve efficiency. The specifications for power saving have been subject to annual changes, and it has been required to improve efficiency by saving power in the light load operation other than a normal operation.

Most of the losses of the switching power supply in the light load operation are caused by the switching operation. Therefore, in order to reduce the loss caused by the switching operation, measures are taken to lengthen a turn-on time of the switching element to increase energy of each switching operation while lengthening an inactive period to reduce the number of switchings per unit time. The long inactive period, however, leads to a low switching frequency. Sound generated by the decrease in switching frequency may enter the audible range and be audible by human ears. The sound generated by the decrease in switching frequency contains harmonic waves and is therefore raspy.

One well-known method for reducing such humming sound (hereinafter referred to as vibration noise) from a transformer is to suppress a magnetic field variation of the transformer to reduce the vibration noise. Conventionally, a method of using a core material having a large cross-sectional area for the transformer or a method of shortening the turn-on time of the switching element to reduce a current of the transformer per switching has been employed in order to suppress the magnetic field variation of the transformer.

A known method for appropriately producing a driving current waveform of the transformer to alleviate the vibration noise of the transformer is to provide a soft-start circuit in the switching power supply device and to gradually change the duty cycle at the rising and falling edges of a voltage across a capacitor at the start of activation. By setting the driving current waveform of the transformer to be gradually larger or gradually smaller, the magnetic flux of the transformer does not change easily, and hence the generation of vibration noise can be reduced, for example, as disclosed in Japanese Patent No. 3665984.

However, the use of a core material having a large cross-sectional area for the transformer increases the size of the transformer, which makes it difficult to downsize the device. The method of shortening the turn-on time of the switching element can reduce the turn-on time and reduce the change in magnetic field to alleviate the vibration noise of the transformer, but increases the number of switchings per unit time, resulting in a larger switching loss. The method of changing the driving current waveform of the transformer to be gradually larger or gradually smaller is difficult to be applied to the reduction in power consumption if energy to be supplied to a load on the secondary side is small. This is because it is difficult for the soft-start circuit to change the current waveform to be gradually larger or gradually smaller in the light load operation. In the conventional methods, it is necessary to reduce the energy to be supplied by one switching so as to perform a larger number of switchings, or necessary to increase the capacitance of the capacitor on the secondary side several times without changing the energy to be supplied by one switching. The former method increases the switching loss to deteriorate efficiency, and the latter method increases the cost.

In other words, in order to reduce the number of switchings to alleviate the switching loss in the switching power supply, energy per pulse applied to the transformer is increased, and hence large sound is generated, which is a tradeoff.

SUMMARY OF THE INVENTION

In view of the above-mentioned circumstances, the purpose of the present invention is to provide a switching power supply capable of reducing vibration noise generated from a transformer in a light load operation without increasing the size of the transformer and without increasing a loss caused by switching.

According to an exemplary embodiment of the present invention, a purpose of the present invention is to provide a power supply device, including a transformer in which a primary side and a secondary side are insulated with each other, a switching unit for driving the primary side of said transformer, a control unit for outputting a pulse signal to said switching unit to control a switching operation including a period during which said switching unit is turned on multiple times, in order to output predetermined electric power from said secondary side of said transformer, and an output control unit for continuously outputting a pulse signal to said control unit in the period during which said switching unit is turned on multiple times, a first change unit for changing an interval between turn-on times in which the switching unit is turned on multiple times.

Another purpose of the present invention is to provide an image forming apparatus, including an image forming unit for forming an image, a control unit for controlling an operation of said image forming unit, and a power supply for supplying electric power to said control unit, wherein said power supply includes a transformer in which a primary side and a secondary side are insulated with each other, a switching unit for driving the primary side of said transformer, a control unit for outputting a pulse signal to said switching unit to control a switching operation including a period during which said switching unit is turned on multiple times, in order to output predetermined electric power from the secondary side of said transformer, and an output control unit for continuously outputting a pulse signal to the control unit in the period during which said switching unit is turned on multiple times, a first change unit for changing an interval between turn-on times in which the switching unit is turned on multiple times.

Further features of the present invention will become apparent from the following description of exemplary embodiments with reference to the attached drawings.

BRIEF DESCRIPTION OF THE DRAWINGS

FIG. 1 illustrates a circuit diagram of a power supply circuit according to a first embodiment of the present invention.

FIG. 2A illustrates a circuit diagram of a circuit for controlling a forced turn-off time in the power supply circuit according to the first embodiment.

FIG. 2B shows an operation waveform diagram of the forced turn-off time control circuit in a light load operation.

FIG. 3 is a graph showing frequency response characteristics of the feedback gain of the circuit according to the first embodiment.

FIGS. 4A, 4B, and 4C are graphs showing frequency analysis on transformer driving waveforms according to the first embodiment.

FIG. 5A is a waveform of a transformer driving voltage input to a switching element that drives the transformer according to the first embodiment.

FIG. 5B is a graph showing frequency analysis on a sound pressure level of sound generated by the transformer according to the first embodiment in response to the waveform of FIG. 5A.

FIG. 5C is a waveform of the transformer driving voltage input to the switching element that drives the transformer according to the first embodiment.

FIG. 5D is a graph showing frequency analysis on a sound pressure level of sound generated by the transformer according to the first embodiment in response to the waveform of FIG. 5C.

FIG. 6A is a graph showing a transformer driving waveform, for describing vibration noise according to the first embodiment.

FIG. 6B is a graph showing frequency analysis on the transformer driving waveform.

FIG. 7A is a graph showing frequency analysis on a resonant frequency of the transformer, for describing vibration noise according to the first embodiment.

FIG. 7B is a graph showing frequency analysis on a sound pressure level of sound generated by the transformer.

FIG. 8A is a circuit diagram of a power supply circuit according to a second embodiment of the present invention.

FIG. 8B is an internal block diagram of a power supply IC according to the second embodiment.

FIGS. 9A, 9B, and 9C are graphs showing operation waveforms in the light load operation according to the second embodiment.

FIG. 10A is a circuit diagram of a power supply circuit according to a third embodiment of the present invention.

FIGS. 10B, 10C, and 10D are graphs showing operation waveforms in the light load operation.

FIG. 11 is a graph showing frequency analysis on a transformer driving waveform according to the third embodiment.

FIG. 12 is a diagram illustrating a configuration of an image forming apparatus according to a fourth embodiment of the present invention.

DESCRIPTION OF THE EMBODIMENTS

A specific configuration of the present invention is described below by way of embodiments. The following embodiments are merely an example, and the technical scope of the present invention is not intended to be limited to the embodiments.

First Embodiment

(Configuration of Power Supply Circuit)

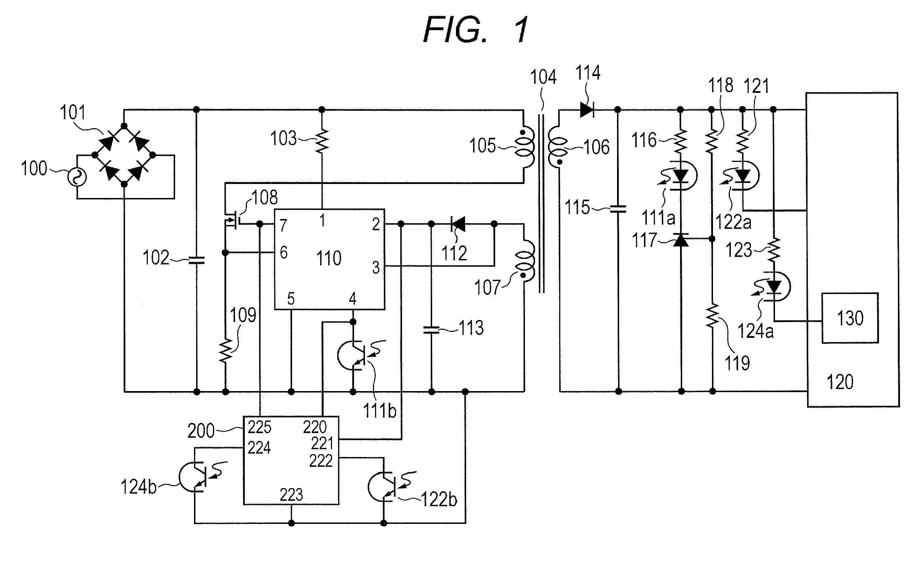

FIG. 1 illustrates a circuit diagram of a switching-mode power supply (hereinafter also referred to as switching power supply) according to a first embodiment of the present invention. The circuit diagram exemplified in this embodiment is a quasi-resonant switching power supply. This embodiment describes a commonly-used quasi-resonant IC as an example of a switching control IC 110.

Description is given of the switching control IC 110. A terminal 1 of the switching control IC 110 is a start-up terminal. A terminal 2 of the switching control IC 110 is a power supply terminal. When a voltage from the terminal 2 of the switching control IC 110 is low, a high voltage switch is turned ON so that power is supplied to the switching control IC 110 via a start-up resistor 103 provided outside the switching control IC 110, and the switching control IC 110 operates. When a switching element 108 of FIG. 1 is turned ON and OFF, a voltage is supplied from an auxiliary winding 107 of a transformer 104, and the voltage of the terminal 2 increases and becomes stable. The switching element 108 is provided on the primary side of a power supply device, and turns ON and OFF the supply of power to the transformer 104. The switching element 108 in this embodiment uses an FET. The transformer 104 insulates the primary side and the secondary side from each other.

The increased voltage of the terminal 2 allows the switching control IC 110 to operate only with power supplied from the terminal 2 while the voltage supply from the terminal 1 is interrupted. A terminal 3 of the switching control IC 110 is a terminal for detecting a lower limit (decrease) of a flyback voltage. The switching control IC 110 outputs a High level signal from a terminal 7 in response to a timing at which the flyback voltage input to the terminal 3 reaches the lower limit, to thereby turn ON the switching element 108. A terminal 4 is a feedback terminal, which operates so that the gate of the switching element 108 cannot be turned ON in a period during which a voltage of the terminal 4 is smaller than an internal reference voltage (pulse stop voltage) of the switching control IC 110. A terminal 5 and a terminal 6 of the switching control IC 110 are a GND terminal and a current detection terminal, respectively. As a gate current increases, a voltage of a current detection resistor 109 increases. When the voltage of the current detection resistor 109 becomes higher than a feedback voltage of the terminal 4, the circuit operates to turn OFF the switching element 108.

(Operation of Switching Control IC)

Next, a general operation of the switching control IC 110 is described. When power is input from an AC line input 100 via a diode bridge 101, the switching control IC 110 is supplied with a voltage via the start-up resistor 103 connected to the terminal 1. Accordingly, the switching control IC 110 outputs a High level signal from the terminal 7 to turn ON the switching element 108. At this time, no voltage has been generated yet in a capacitor 115 provided on the secondary side of the transformer 104, or only a low voltage remains in the capacitor 115. Thus, a photodiode 111a of a photocoupler 111 does not emit light, and a phototransistor 111b of the photocoupler 111 is not turned ON, either. Accordingly, the voltage of the terminal 4 of the switching control IC 110 is maintained to be high, and the switching control IC 110 continues to output the High level signal from the terminal 7 and the switching element 108 continues to be turned on until a drain current of the switching element 108 becomes larger.

The switching control IC 110 compares the voltage of the terminal 4 to the voltage of the terminal 6, that is, the voltage generated across the current detection resistor 109. When the voltage of the terminal 6 becomes higher than the voltage of the terminal 4, the switching control IC 110 outputs a Low level signal from the terminal 7 to turn OFF the switching element 108. When the switching element 108 is turned OFF, a voltage is generated in a secondary winding 106 of the transformer 104 via a diode 114 in the direction of charging the capacitor 115, and hence the capacitor 115 on the secondary side is charged. This current decreases as the transformer 104 discharges energy. When the transformer 104 finishes discharging the energy, the voltage of the secondary winding 106 becomes smaller than the voltage of the capacitor 115 on the secondary side, and the diode 114 becomes non-conductive. Then, a drain terminal voltage of the switching element 108 on the primary side also decreases, and the drain terminal voltage starts to freely oscillate about a voltage of a primary electrolytic capacitor 102. A voltage waveform similar to the freely oscillating voltage appears also in the auxiliary winding 107, and the voltage of the terminal 3 of the switching control IC 110 connected to the auxiliary winding 107 decreases. The terminal 3 is provided with the function of detecting the lower limit of the voltage. When the switching control IC 110 detects the lower limit of the terminal 3, the switching control IC 110 outputs a High level signal from the terminal 7 to turn ON the switching element 108. In this way, a pulse wave is output from the terminal 7 of the switching control IC 110 to repeatedly turn ON and OFF the switching element 108, and hence driving pulses (hereinafter also referred to as pulses) are continuously output to drive a primary winding 105 of the transformer 104.

A capacitor 113 is charged by the voltage of the auxiliary winding 107. When the voltage of the capacitor 113 increases to a voltage high enough to serve as a power supply of the switching control IC 110, the switching control IC 110 stops the supply of power from the terminal 1 and operates only with power of the terminal 2. When a rectified and smoothed output voltage generated on the secondary side of the transformer 104 increases to approach a predetermined voltage, a shunt regulator 117 operates to start the flow of a current to the photodiode 111a of the photocoupler 111. Then, the voltage of the terminal 4 decreases, and a maximum current value of the switching element 108 during the ON period decreases. Thus, the ON width (turn-on time) of the switching element 108 becomes shorter, and energy to be accumulated in the transformer 104 for each switching is reduced to suppress the increase in output voltage. In this way, control is made to output a predetermined target voltage. Reference numeral 112 represents a diode; 116, a resistor; 118 and 119, resistors; and 121 and 123, resistors.

(Forced Turn-off Time Control Circuit)

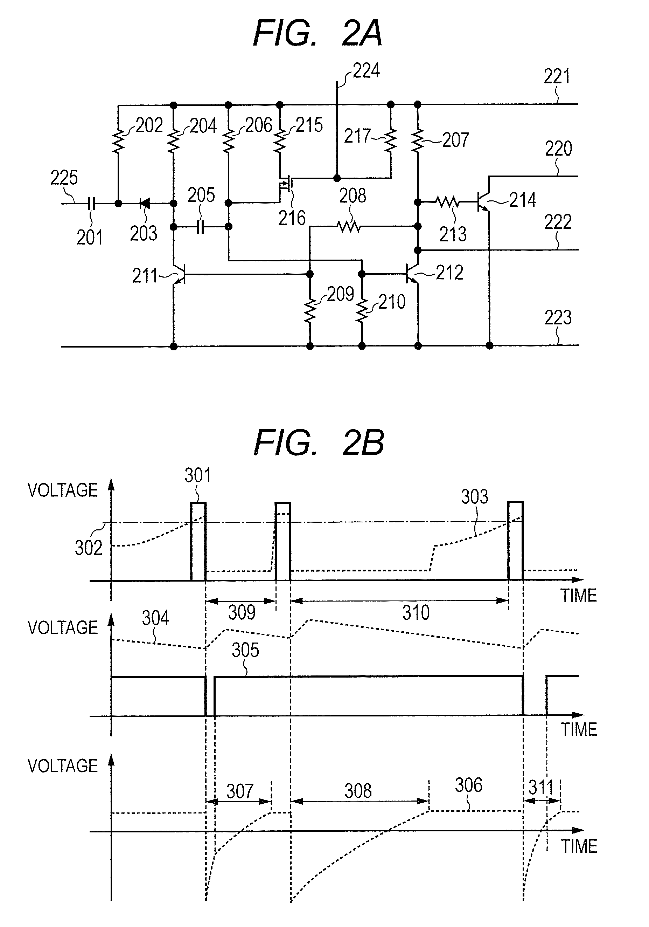

Description is given of a forced turn-off time control circuit 200 (output control means), which is the feature of this embodiment. The power supply device in this embodiment performs an intermittent switching operation (intermittent oscillation operation) for reducing the number of switching per unit time in a light load operation in order to reduce the loss caused by the switching operation. The intermittent switching operation (hereinafter referred to as burst operation) has a period during which the switching operation is active and a period during which the switching operation is inactive. The cycle in the intermittent switching operation is referred to as intermittent switching cycle (hereinafter referred to as burst cycle). This embodiment has the feature that a forced turn-off time is provided to the switching element 108 and the turn-off time of the switching element 108 can be switched in the burst operation. FIG. 2A illustrates an example of the forced turn-off time control circuit 200 in this embodiment. A terminal 222 is a control terminal, and is connected to an enable signal. The enable signal becomes Low level in a normal operation and becomes high impedance in the light load operation. The terminal 222 can therefore be switched depending on the state of a device in which the switching power supply is used. The terminal 222 may be configured to detect a load current of the power supply so that the forced turn-off time control circuit 200 can operate automatically when the current is small. A terminal 221 is connected to the power supply terminal 2 of the switching control IC 110. A terminal 223 is connected to the GND terminal 5 of the switching control IC 110. A terminal 225 is an input terminal, and is connected to the terminal 7 of the switching control IC 110. A terminal 220 is an output terminal, and is connected to the terminal 4 of the switching control IC 110.

In the normal operation, the control terminal 222 becomes Low level as described above, and hence the collector of a transistor 212 is connected to Low level, and a transistor 214 is turned OFF. Thus, the forced turn-off time control circuit 200 does not operate. As described above, when the enable signal is changed by the control terminal 222 to be high impedance in the light load operation, the forced turn-off time control circuit 200 operates in response to a signal input to the input terminal 225 from a gate driving signal of the switching element 108. A terminal 224 is a turn-off time control terminal, and is connected to a photocoupler 124. The terminal 224 can turn ON and OFF an FET 216 (first change means) by a microcomputer 130 included in a load circuit 120 on the secondary side. Specifically, the microcomputer 130 causes a photodiode 124a of the photocoupler 124 to emit light to turn ON a phototransistor 124b, to thereby set a gate voltage of the FET 216 to Low level and turn ON the FET 216. In addition, the microcomputer 130 turns OFF the phototransistor 124a of the photocoupler 124 to turn OFF the phototransistor 124b, to thereby set the gate voltage of the FET 216 to High level and turn OFF the FET 216. Reference numerals 202, 204, 207, 208, 209, 213, and 217 represent resistors.

(Operation Waveform of Forced Turn-off Time Control Circuit)

FIG. 2B shows waveforms when the forced turn-off time control circuit 200 operates, that is, in the light load operation. The horizontal axis represents time and the vertical axis represents voltage. As described above, the control terminal 222 becomes high impedance in the light load operation. Reference numeral 301 represents a waveform of a gate driving voltage of the switching element 108; 302, a pulse stop voltage serving as a reference voltage in the switching control IC 110; and 303, a feedback terminal (terminal 4) voltage of the switching control IC 110. Reference numeral 304 represents a voltage of the capacitor 115 on the secondary side; 305, a gate voltage of the FET 216; and 306, a base terminal voltage of the transistor 212. When the feedback terminal voltage 303 exceeds the pulse stop voltage 302, the switching control IC 110 outputs a High level signal from the terminal 7, and continues to turn ON the switching element 108 until a current detection terminal voltage of the terminal 6 becomes equal to the feedback terminal voltage. In this period, the current is interrupted by a diode 203, and hence the operation of the forced turn-off time control circuit 200 does not change. Therefore, the transistor 212 is turned ON, and the output of the transistor 214 becomes high impedance. When the current detection terminal voltage of the terminal 6 exceeds the feedback terminal voltage, the switching control IC 110 outputs a Low level signal from the terminal 7, and the gate terminal voltage decreases to turn OFF the switching element 108.

Then, a current flows via a capacitor 201, the diode 203, and a capacitor 205, and, as shown in FIG. 2B, the base terminal voltage 306 of the transistor 212 becomes lower at the falling edge at which the switching element 108 is turned OFF. Then, the transistor 212 is turned OFF, and transistors 211 and 214 are turned ON. A current starts to flow through the capacitor 205 via a resistor 206, and the transistor 212 continues to be turned OFF in a period 307 until the voltage of the capacitor 205 becomes higher than a base-emitter voltage VBE of the transistor 212. In the period during which the transistor 212 is turned OFF, the transistor 214 continues to be turned ON, and hence the terminal 4 of the switching control IC 110 is fixed to Low level in this period and becomes lower than the pulse stop voltage 302. Thus, the terminal 4 stops the oscillation. When the voltage of the capacitor 205 increases with time, the transistor 212 is turned ON and the transistors 211 and 214 are turned OFF, and hence the terminal 4 of the switching control IC 110 becomes open and can oscillate. Therefore, a turn-off time 309 from a gate-ON to the next gate-ON of the switching element 108 is determined by a time constant of the capacitor 205 and the resistor 206.

The waveform 301 turns ON the switching element 108 at the first wave, the second wave, the third wave ... in order of time. In the following, in the waveform 301, a cycle including a short turn-off time as represented by an interval between the first wave and the second wave (interval 309) and an interval between the third wave and the fourth wave (not shown) is referred to as short cycle (predetermined cycle), and a cycle including a long turn-off time as represented by an interval between the second wave and the third wave (interval 310) is referred to as long cycle. An interval from the first wave to the third wave in this embodiment corresponds to conventional one burst cycle. To be precise, in this embodiment, the interval from the first wave to the third wave is a long cycle interval. Alternatively, however, as described later, an interval from the second wave to the third wave may be set as a long cycle because the cycle from the first wave to the second wave (for example, microseconds) is significantly shorter than the cycle from the first wave to the third wave (for example, milliseconds).

When the switching element 108 is turned OFF, the capacitor 115 on the secondary side is charged by energy discharged from the transformer 104, and the voltage of the capacitor 115 increases as shown in the waveform 304. The microcomputer 130 included in the load circuit 120 on the secondary side can detect the increase in the waveform 304 and know the timing at which the switching element 108 is turned OFF. Therefore, if the microcomputer 130 causes a current to flow through the photodiode 124a in the period from when the switching element 108 is turned OFF to when the switching element 108 is turned ON again, the FET 216 as a P-channel (Pch) transistor can be turned ON. In this case, the turn-off time 309 having a short cycle is determined by a time constant of the capacitor 205 and resistors 206 and 215. Note that, a resistor 210 has a resistance value large enough not to affect the turn-off time 309.

The voltage of the terminal 221 is represented by V1; the base-emitter voltage of the transistor 212, VBE; the capacitance of the capacitor 205, C; the resistance value of the resistor 206, R1; the resistance value of the resistor 210, R2; and the resistance value of the resistor 215, R3. When the FET 216 is turned OFF, a time T1 from when the switching element 108 is turned OFF to when the switching element 108 is turned ON can be represented by Expression (1) below.

$$((R1+2R2)/(R1+R2) \cdot V1-VBE)(1-\exp(-T1/(C \cdot R4)))=V1$$

$$\ldots (1)$$

where R4=R1·R2/(R1+R2)

Now, description is given of Expression (1). During a period in which the terminal 225 is applied with V1, the left terminal voltage of the capacitor 205 is V1 and the right terminal voltage thereof is VBE. After that, when the voltage of the terminal 225 decreases to GND level, the left terminal voltage of the capacitor 205 becomes GND and the right terminal voltage thereof becomes "VBE-V1". At this time, the transistor 212 is turned OFF, and the transistor 211 is turned ON. Therefore, the right terminal voltage of the capacitor 205, that is, the base voltage of the transistor 212 tries to rise to a voltage value "(R2/(R1+R2))·V1" based on a time constant "C·R1·R2/(R1+R2)" determined by the resistor 206, the resistor 210, and the capacitor 205. However, the transistor 212 is present, and hence the voltage rises to VBE and becomes stable. A time T1 necessary for the right terminal voltage of the capacitor 205 to rise to VBE from VBE-V1 is given by the following expression.

$$((R2/(R1+R2)) \cdot V1-(VBE-V1))(1-\exp(-T1/(C \cdot R4)))=V1$$

where R4=R1·R2/(R1+R2)

The above expression is transformed to Expression (1).

Further, in the case where the FET 216 is turned ON, a time T2 from when the switching element 108 is turned OFF to when the switching element 108 is turned ON can be represented by Expression (2) below.

$$((R5+2R2)/(R5+R2) \cdot V1-VBE)\exp(-T2/(C \cdot R6))=V1 \quad \ldots (2)$$

where R5=R1·R3/(R1+R3) and R6=R1·R2·R3/(R1·R2+R2·R3+R3·R1)

Expression (2) is the same as Expression (1) except that a time constant determined by R5=R1·R3/(R1+R3) and R6=R1·R2·R3/(R1·R2+R2·R3+R3·R1) is "C·R6" and that the rise voltage is "(R2/(R5+R2))·V1", and hence description thereof is omitted.

As shown in Expression (1) and Expression (2), the value of the time T varies depending on ON and OFF of the FET 216. In this embodiment, ON and OFF of the FET 216 can be switched until the base voltage of the transistor 212 rises to reach VBE. In this case, as shown in periods 307 and 311 of FIG. 2B, the waveform 306 in which the base voltage of the transistor 212 increases forms a rising waveform satisfying the left side of Expression (1) during the OFF period of the FET 216 and a rising waveform satisfying the left side of Expression (2) during the ON period of the FET 216.

Specifically, in the interval 307, the waveform 306 of the increasing base voltage of the transistor 212 becomes a rising waveform satisfying the left side of Expression (2) in the interval during which the gate voltage 305 of the FET 216 is Low level, that is, the interval during which the FET 216 is turned ON. Then, in the interval 307, the waveform 306 in which the base voltage of the transistor 212 increases becomes a rising waveform satisfying the left side of Expression (1) in the interval during which the gate voltage 305 of the FET 216 is High level, that is, the interval during which the FET 216 is turned OFF. Similarly, also in the interval 311, the waveform 306 in which the base voltage of the transistor 212 increases becomes a rising waveform satisfying the left side of Expression (2) in the interval during which the FET 216 is turned ON and a rising waveform satisfying the left side of Expression (1) in the interval during which the FET 216 is turned OFF. As described above, when the left side of Expression (2) is satisfied, the rising becomes steeper than that when the left side of Expression (1) is satisfied.

The interval 307 and the interval 311 are different in that the interval 311 has a longer period during which the gate voltage 305 of the FET 216 is Low level, that is, the FET 216 is turned ON, than the interval 307. In this way, the microcomputer 130 controls the period of turning ON or OFF the FET 216 by the turn-off time control terminal 224, and hence the interval 311 can be set to be shorter than the interval 307. In the interval 310 between the second wave and the third wave of the waveform 301, the microcomputer 130 controls the turn-off time control terminal 224 to set the gate voltage 305 of the FET 216 to High level and turn OFF the FET 216. The waveform 306 of the increasing base voltage of the transistor 212 in this interval becomes a rising waveform satisfying the left side of Expression (1) as shown in an interval 308.

The microcomputer 130 monitors the voltage value (waveform 304) of the capacitor 115 on the secondary side, to thereby detect the timing at which the switching element 108 is turned OFF. Accordingly, by detecting the timing at which the switching element 108 is turned OFF, the microcomputer 130 can control the ON/OFF period of the FET 216 in a period until the base voltage of the transistor 212 reaches VBE. In other words, the microcomputer 130 controls the turn-on and turn-off time of the FET 216 in a period from when the switching element 108 is turned OFF to when the switching element 108 is turned ON next time, so that the short-cycle turn-off time 309 can be finely adjusted to the interval 307 or the interval 311.

In the light load operation, the circuit in this embodiment performs the burst operation. The transformer 104 is driven by a switching pulse, and hence, when the voltage of the capacitor 115 on the secondary side rises, the feedback terminal voltage 303 decreases correspondingly. At this time, when the feedback terminal voltage 303 falls below the pulse stop voltage 302 of the switching control IC 110, even if the base voltage value (waveform 306) of the transistor 212 reaches VBE, the circuit no longer outputs a switching pulse. When energy stored in the capacitor 115 on the secondary side is consumed to decrease the voltage of the capacitor 115, the circuit operates so that the feedback terminal voltage 303 rises again and the pulse output is restarted at the timing at which the feedback terminal voltage 303 exceeds the pulse stop voltage 302 of the switching control IC 110.

(Frequency Response Characteristics of Feedback Gain)

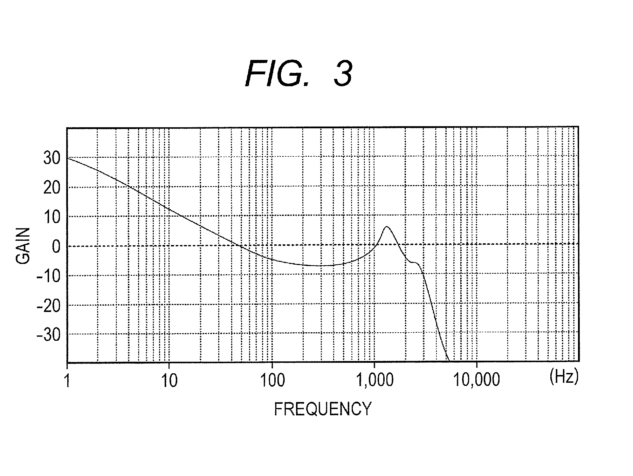

In this embodiment, by adjusting the turn-off time of the switching pulse, the circuit is operated so that the number of switchings in the burst operation is two. FIG. 3 shows an example of the frequency response characteristics of the feedback gain in the circuit of this embodiment. The horizontal axis represents the frequency (Hz) and the vertical axis represents the gain. In this embodiment, in the burst operation, the short-cycle OFF width of the switching pulse is about 50 $\mu$s. The OFF width is about 20 kHz in terms of frequency, and hence the gain is -40 or less as shown in FIG. 3. In other words, even if the voltage on the secondary side rises by one or two switchings in the burst operation, the voltage fluctuations in this period do not directly lead to the fluctuations in feedback voltage. Accordingly, the first wave and the second wave of the switching pulse have substantially the same turn-on time. The feedback voltage fluctuates after a longer period of time has elapsed.

As described above, the turn-off time of the switching pulse in the burst operation can be controlled by the resistance values of the resistors 206 and 215 and the turn-on time of the FET 216. Accordingly, in the burst operation, the base voltage rise time of the transistor 212 in the interval 307 between the first wave and the second wave of the switching pulse can be controlled to be several tens of $\mu$s, and the base voltage rise time in the interval 308 between the second wave and the third wave can be controlled to be several hundreds of $\mu$s. Through this control, in the burst operation, the pulses are output until the second switching wave with which the feedback voltage cannot respond to the voltage fluctuations on the secondary side. On the other hand, when the switching control IC 110 detects the lower limit of the flyback voltage by the terminal 3, and the third wave can be output, the feedback voltage sufficiently responds to the voltage fluctuations on the secondary side. Accordingly, the feedback voltage becomes lower than the pulse stop voltage, and hence the third wave is not output at the same cycle as the short cycle of the first wave and the second wave. In this way, by securing a sufficiently long turn-off time (interval 310) of the switching pulse after the output of the second wave of the switching pulse in the burst operation, the number of switchings can be controlled to two.

Another means for controlling the number of switchings to two, other than the means described in this embodiment, is, for example, means for changing the current detection resistor 109 to adjust the turn-on time of one switching pulse. In other words, the number of switchings is controlled to two by adjusting the current detection resistor 109 so that the voltage of the feedback terminal does not become equal to or lower than the pulse stop voltage at the first wave in the burst operation because of shortage of electric power and that the voltage of the feedback terminal becomes equal to or lower than the pulse stop voltage reliably at the second wave. The adjustment of the current detection resistor 109 changes the upper limit value of the current as well. Thus, another method may be used, such as forming a non-linear current detection circuit so that the pulse stop voltage can be changed. By using the above-mentioned means, the ON width of the switching pulse is determined based on the current detection resistor 109, and the short-cycle turn-off time 309 is determined based on a time constant of the resistors 206 and 215 and the capacitor 205 in the circuit and the turn-on time of the FET 216. In the long-cycle turn-off time 310, a transformer driving waveform that changes in accordance with the load variation can be generated.

In this embodiment, the voltage of the control terminal of the switching element 108 is used as a signal source, and the voltage of the feedback terminal 4 of the switching control IC 110 is set to a low voltage, specifically, a voltage equal to or lower than the pulse stop voltage included in the switching control IC 110. Thus, in this embodiment, the switching is inhibited for a prescribed time. This circuit is, however, an example, and another means that can obtain the same effect may be used.

(Frequency Analysis on Transformer Driving Waveform)

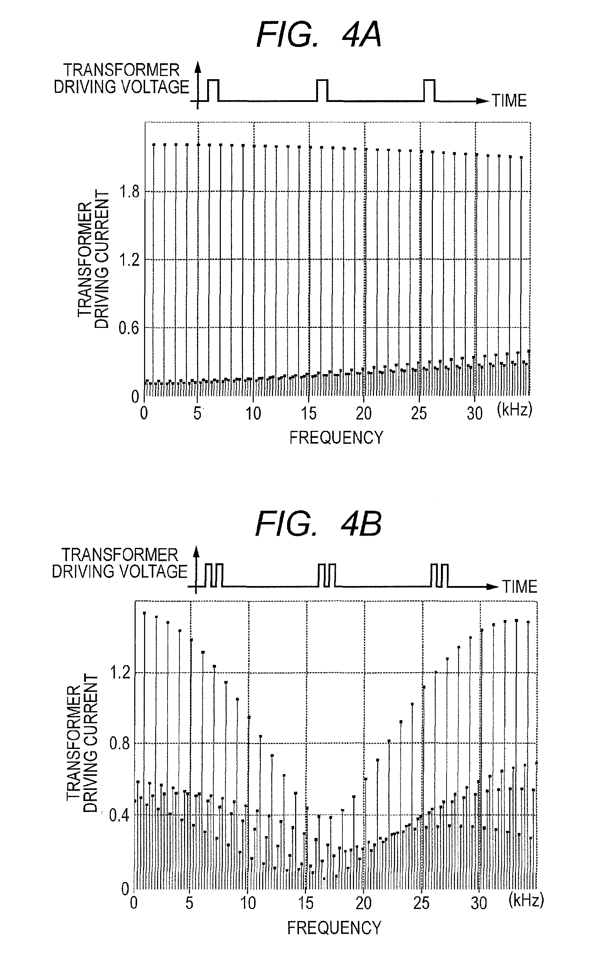

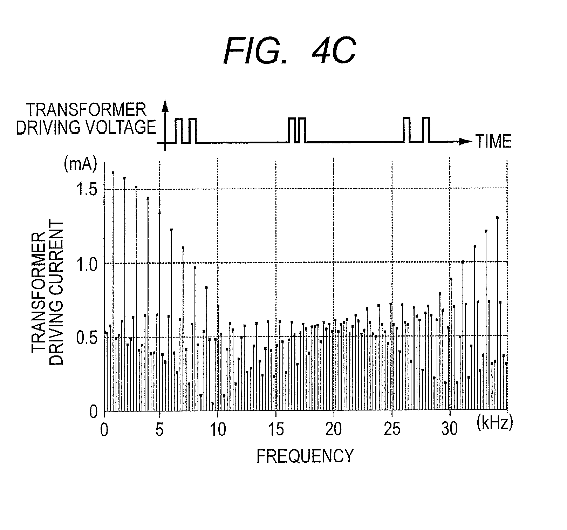

FIGS. 4A to 4C show the results of frequency analysis on three kinds of transformer driving current waveforms generated by using the circuit in this embodiment. The horizontal axis represents the frequency (kHz) and the vertical axis represents the transformer driving current amount (transformer driving current). FIG. 4A is a frequency analysis diagram of the driving waveform measured when the turn-off time width and the turn-on time width of the transformer driving voltage pulse are set to 1 ms and 2 μs, respectively. FIG. 4B is a frequency analysis diagram of the driving current waveform measured when the turn-off time width of the driving voltage pulse on the long cycle side is set to 1 ms, the turn-on time width of the driving voltage pulse is set to 1 μs, and the turn-off time width of the driving voltage pulse on the short cycle side is set to 30 μs. FIG. 4C is a frequency analysis diagram of the driving current waveform measured when the turn-off time width of the driving voltage pulse on the long cycle side is set to 1 ms and the turn-on time width of the driving voltage pulse is set to 1 μs. Further, FIG. 4C is a frequency analysis diagram of the driving waveform in which the driving voltage pulses on the short cycle side having turn-off time widths of 25 μs, 30 μs, and 50 μs are sequentially switched and output so that the pulses having the turn-off time widths of the same value are not successively output.

Regarding FIG. 4A, a frequency analysis diagram is obtained in which discrete frequency peaks are uniformly distributed in the entire frequency band of a frequency which is a constant multiple of the transformer driving pulse frequency of 1 kHz. In FIG. 4B, on the other hand, a frequency analysis diagram is obtained which has frequency characteristics that the signal intensity greatly attenuates in the vicinity of a value obtained by frequency-converting the cycle twice the turn-off time width of 30 μs on the short cycle side, that is, 16.6 kHz. In this way, the number of driving pulses to be output in one burst operation is set to two, and the pulse interval between the two waves is adjusted. Thus, the driving frequency characteristics that the signal intensity of a target frequency is attenuated are obtained. The target frequency as used herein is, for example, a frequency of vibration noise of the transformer.

The following is obtained from FIG. 4C. That is, a frequency analysis diagram is obtained which has frequency characteristics that the signal intensity greatly attenuates in a wide frequency band including values obtained by frequency-converting the cycles twice the turn-off time widths of 25 μs, 30 μs, and 50 μs on the short cycle side, that is, three frequencies of 20 kHz, 16.6 kHz, and 10 kHz. In this way, the turn-off time width on the short cycle side is varied while having a predetermined width from the center cycle. Thus, as compared with the frequency analysis diagram of FIG. 4B in which the turn-off time width on the short cycle side is not varied, the transformer driving frequency characteristics that the signal intensity is attenuated in a wide bandwidth can be produced. In other words, by changing the turn-off time of a pulse wave in a short cycle for each burst operation (each intermittent switching operation), the driving frequency characteristics that the signal intensity is attenuated while having a width in the vicinity of a target frequency can be obtained. The center frequency as used herein is a cycle corresponding to a frequency to be attenuated, such as a frequency of vibration noise of the transformer. In FIG. 4C, the width of the short-cycle turn-off time is changed in order to provide a predetermined width in the vicinity of the frequency to be attenuated. For example, in the case where the above-mentioned three frequencies are used, the center cycle is an average value thereof, that is, about 32 μs.

(Sound Pressure Level Generated by Transformer Driving Waveform)

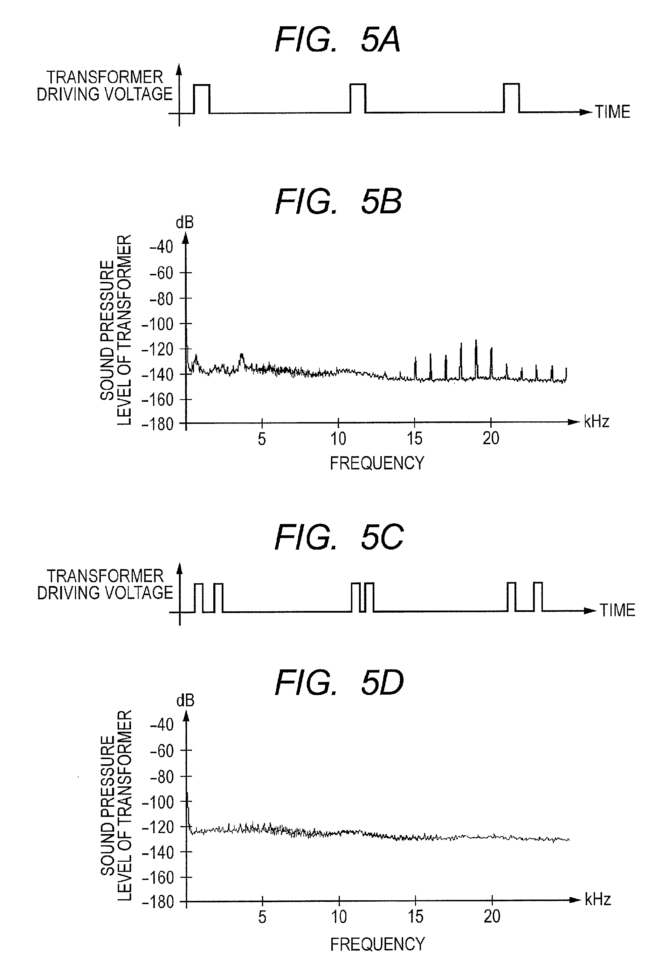

Next, FIGS. 5A to 5D show how the sound pressure level of sound generated by the driving waveform changes when the switching power supply is operated. FIGS. 5A and 5C show the waveforms of the transformer driving voltage input to the switching element 108 that drives the transformer 104. The horizontal axis represents time and the vertical axis represents the driving voltage. FIGS. 5B and 5D show the waveforms obtained by performing frequency analysis on the results of measuring the sound pressure level of sound generated from the transformer 104 (hereinafter referred to as sound pressure level of transformer) by a microphone. The horizontal axis represents the frequency (kHz) and the vertical axis represents the sound pressure level (dB) of the transformer. In the driving waveforms of FIGS. 5A and 5B, a pulse is singly output at 1 kHz. In the driving waveforms of FIGS. 5B and 5C, the long cycle and the short cycle are 1 kHz in total. The transformer 104 is driven so that the same energy per unit time is input to the transformer 104 in FIGS. 5A and 5C. In other words, the transformer 104 is driven under the conditions where the load voltage and current on the secondary side of the power supply are the same in FIGS. 5A and 5C. To facilitate the comparison, the turn-on times of the switching element 108 in FIGS. 5A and 5C have the same width.

(Conventional Example)

First, description is given of FIGS. 5A and 5B. FIG. 5B shows frequency characteristics of the sound pressure level of the transformer in the case where the transformer 104 is driven by each wave at 1 kHz as shown in FIG. 5A. The frequency characteristics of the sound pressure level of the transformer shown in FIG. 5B are obtained by superimposing resonant frequency characteristics of the transformer 104 and frequency characteristics of the driving waveform. The frequency characteristics of the driving waveform are made of harmonics of a fundamental frequency of 1 kHz.

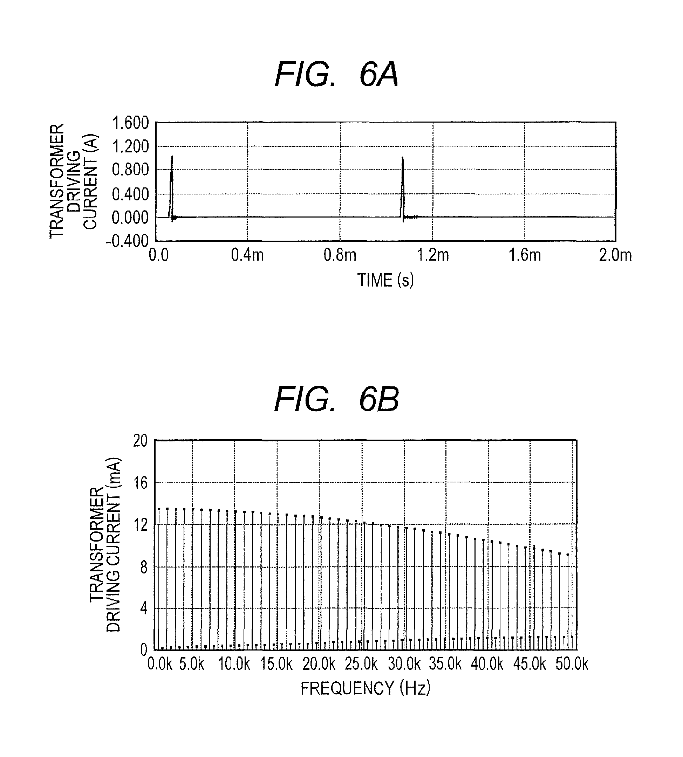

Now, description is given of the reason why the switching frequency shown in FIG. 5A becomes sound containing harmonics. FIG. 6A shows a waveform diagram of a transformer driving current at a switching frequency of 1 kHz and with a turn-on time of 5 microseconds ($\mu$s). The horizontal axis represents time (seconds (s)) and the vertical axis represents the transformer driving current (A). When the switching frequency is several kHz or less as described above, the inactive period of the switching element becomes longer, and hence the transformer driving current waveform becomes a delta function waveform as shown in FIG. 6A. FIG. 6B shows frequency characteristics obtained by frequency analysis on such transformer driving current waveform. The horizontal axis represents the frequency (Hz) and the vertical axis represents the transformer driving current (mA). The transformer driving current has a harmonic component of a frequency determined by multiplying the switching frequency as the fundamental frequency, and hence the transformer driving current has a current waveform having energy driven by the harmonic component.

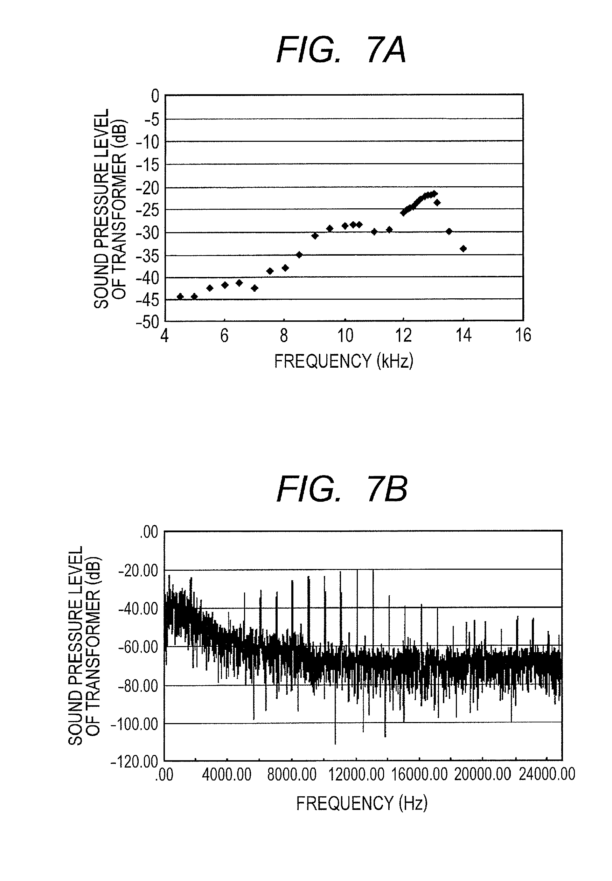

The transformer of the switching power supply also performs the switching operation and is driven at a predetermined resonant frequency. This mechanical resonant frequency of the transformer depends on the shape of the core of the transformer, but has a peak of the resonant frequency at about several kHz to ten and several kHz. FIG. 7A shows an example of the mechanical resonant frequency of the transformer. The horizontal axis represents the frequency (kHz) and the vertical axis represents the sound pressure level (dB) of sound generated from the transformer. FIG. 7B shows the result of frequency characteristics analysis on the sound measured by a microphone, which is generated by driving of the transformer having the characteristics shown in FIG. 7A with the transformer driving current waveform shown in FIG. 6A. The horizontal axis represents frequency (Hz) and the vertical axis represents the sound pressure level (dB) of the sound generated from the transformer. As shown in FIG. 7B, the sound pressure level of the sound generated from the transformer has characteristics containing harmonics of the intermittent switching frequency as the fundamental frequency so that the envelope has resonant characteristics of the transformer. In other words, when the switching frequency and the mechanical resonant frequency of the transformer are superimposed to decrease the switching frequency, sound in the audible range is generated as vibration noise from the transformer.

As described above, the frequency characteristics of the sound pressure level of the transformer shown in FIG. 5B have a waveform diagram having a peak at every 1 kHz. The envelope of the frequency characteristics of the sound pressure level of the transformer is similar to the resonant frequency characteristics of the transformer.

(This Embodiment)

Next, description is given of FIGS. 5C and 5D. In FIG. 5C, a pulse train having two kinds of pulse intervals, a long cycle and a short cycle, is generated as a transformer driving waveform. Further, the short-cycle pulse interval is caused to fluctuate in the range of 30 $\mu$s $\pm$12.5% for each output. FIG. 5D shows frequency characteristics of the sound pressure level of the transformer measured when the pulse train shown in FIG. 5C is used as the transformer driving waveform. It is understood that a frequency peak per kHz present around 14 to 24 kHz in FIG. 5B attenuates and decreases to a dark noise level. In this way, the cycle on the long cycle side is set to 1 ms (that is, a frequency of 1 kHz), and the pulse interval on the short cycle side is varied for each output, and hence the sound pressure level in a wide range of frequency band corresponding to the pulse interval on the short cycle side can be reduced without changing the fundamental frequency and the harmonic frequency.

Although this embodiment has described an example of repeating two pulses (two waves) in one burst operation, the number of pulses is not limited to two. Even in the case of an even number of waves, such as four waves and six waves, the sound pressure level can be reduced by varying the short-cycle pulse interval for each output as exemplified in this embodiment. That is, the change of the interval between groups of pulse signals can reduce the sound pressure level. In other words, if the interval between the turn-on times in which the switching unit is turned on multiple time, it reduces the sound pressure level. This is because the generation of an even number of pulse waves has the effect of cancelling out generated vibration noise by an antiphase.

According to this embodiment described above, in the switching power supply, the vibration noise generated from the transformer in the light load operation can be reduced without increasing the size of the transformer and without increasing the loss caused by switching.

Second Embodiment

A second embodiment of the present invention is different from the first embodiment in that a switching control IC 900 equipped with an internal forced turn-off time control circuit having the same effect as the forced turn-off time control circuit 200 is used.

(Circuit Diagram of Power Supply Device)

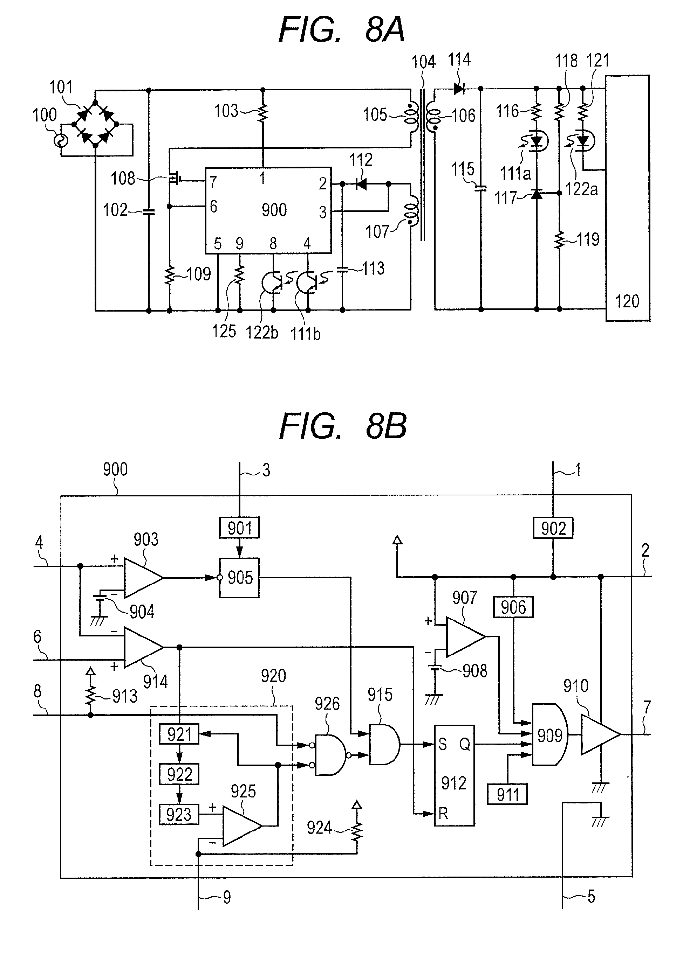

FIG. 8A illustrates a circuit diagram in this embodiment. The same configurations as those described with reference to FIG. 1 are denoted by the same reference symbols, and description thereof is omitted. The circuit operation other than the switching control IC 900 and a resistor 125 is the same as the circuit operation described in the first embodiment, and hence description of the operation is also omitted.

First, an internal function of the switching control IC 900 is described. FIG. 8B illustrates an internal block diagram of the switching control IC 900. The operations of the terminal 1 and the terminal 2 of the switching control IC 900 are the same as those described with reference to FIG. 1 in the first embodiment, and hence description thereof is omitted.

A comparator 907 protects the circuit when the power supply voltage decreases. The comparator 907 compares a voltage input from the terminal 2 with an internally produced reference voltage source 908, to thereby monitor the power supply voltage of the terminal 2. A reference voltage source generation circuit 906 supplies a reference voltage necessary for the operation of the switching control IC 900. A safety circuit 911 monitors an internal temperature of the circuit and a voltage input to each terminal, to thereby detect abnormality. Each of the comparator 907, the reference voltage source generation circuit 906, and the safety circuit 911 outputs a signal to an AND circuit 909 that controls an output to the terminal 7. The AND circuit 909 stops an output of a driver circuit 910 to turn OFF the gate voltage of the switching element 108 connected to the terminal 7 in the case where the reference voltage is not appropriately generated or there is abnormality in ambient environments.

A terminal 3 is a terminal for detecting a lower limit (decrease) of a flyback voltage. A voltage decrease detection circuit 901 monitors the flyback voltage to detect a timing at which the voltage amplitude becomes the lowest. In order to prevent an erroneous operation, a timing generation signal as the output of the voltage decrease detection circuit 901 is output via a one-shot circuit 905. The signal output from the one-shot circuit 905 sets an SR flip-flop circuit 912 via an AND circuit 915.

A terminal 4 is a feedback terminal for performing feedback input. A terminal 5 is a GND terminal. A terminal 6 is a current detection terminal. In the switching control IC 900, a comparator 914 compares the input voltage of the terminal 4 with the input voltage of the terminal 6. When the input voltage of the terminal 6 becomes higher, the comparator 914 resets the SR flip-flop circuit 912. The terminal 4 is connected also to a comparator 903, and the comparator 903 compares the input voltage of the terminal 4 with a pulse stop voltage 904. When the input voltage of the terminal 4 becomes higher, the comparator 903 outputs High level. The output of the comparator 903 is connected to a clear terminal of the one-shot circuit 905. When the voltage of the terminal 4 decreases and the output of the comparator 903 becomes Low level, the one-shot circuit 905 maintains the output of Low level.

The output of the SR flip-flop circuit 912 is connected to the AND circuit 909. Based on the output of the AND circuit 909, the driver circuit 910 turns ON and OFF the switching element 108 which is connected to the terminal 7 and drives the primary winding 105 of the transformer 104.

A terminal 8 is a light load state detection terminal. When the power supply device is in the normal operation, that is, when the power supply device is not in the light load operation, the terminal 8 is pulled up by a resistor 913, and hence a High level signal is input to an AND circuit 926, and the AND circuit 926 continues to output High level regardless of the output from a forced turn-off time control circuit 920. In the light load operation, on the other hand, the terminal 8 is grounded to GND, and a Low level signal is input to the AND circuit 926, and hence the output of the AND circuit 926 depends on the output of the forced turn-off time control circuit 920. In other words, the output of the forced turn-off time control circuit 920 is transmitted to the downstream SR flip-flop circuit 912 only in the light load state.

A terminal 9 is a forced turn-off time setting terminal. The terminal 9 is connected to the resistor 125 provided outside the switching control IC 900. A voltage determined by dividing the power supply voltage of the switching control IC 900 by a resistor 924 and the resistor 125 (hereinafter also referred to as turn-off time setting voltage) is input to a comparator 925.

(Forced Turn-off Time Control Circuit)

Next, detailed description is given of the forced turn-off time control circuit 920 (output control means), which is the feature of this embodiment. When a High level signal is output from the comparator 914, a turn-off time count circuit 921 (first change means) sets a count initial value stored in the circuit to an internal counter, and starts to count up. The High level signal is output from the comparator 914 when the voltage of the terminal 6 becomes higher than the voltage of the terminal 4. In this case, the SR flip-flop circuit 912 is reset, and a Low level signal is output from the terminal 7. Thus, the switching element 108 becomes the OFF state. The turn-off time count circuit 921 has multiple count initial values. Every time High level is output from the comparator 914, the turn-off time count circuit 921 selects one of the multiple count initial values to be set to the internal counter. The turn-off time count circuit 921 then outputs a count value of the internal counter to a PWM output circuit 922.

The PWM output circuit 922 outputs a PWM signal having a duty cycle corresponding to the input count value. In other words, the PWM output circuit 922 controls the PWM signal so as to have a small duty cycle when the count value is small and a large duty cycle when the count value is large. A low-pass filter 923 smoothes the PWM signal output from the PWM output circuit 922, and outputs the smoothed voltage to the comparator 925. The comparator 925 compares a voltage value input from the low-pass filter 923 with a voltage value (turn-off time setting voltage) determined by dividing the power supply voltage of the switching control IC 900 by the resistor 924 and the resistor 125. When the voltage of the low-pass filter 923 is higher, the comparator 925 outputs High level. When the High level signal is output from the comparator 925, the internal counter of the turn-off time count circuit 921 stops its operation, and at the same time, a High level signal is output to the AND circuit 915 from the AND circuit 926. In other words, when the gate terminal voltage of the switching element 108 becomes Low level, the forced turn-off time control circuit 920 operates so that the voltage of the terminal 7 is maintained to Low level in a period determined by the resistance value of the resistor 125.

(Switching Operation in Normal Operation)

In this embodiment, the circuit operates as follows. In the normal operation, as described above, the output of the forced turn-off time control circuit 920 is not transmitted downstream, and hence the switching control IC 900 operates similarly to the switching control IC 110 described in the first embodiment, which is a typical quasi-resonant IC.

(Switching Operation in Light Load Operation)

Next, the operation in the light load operation is described. In the light load operation, when the voltage to the terminal 4 decreases and becomes equal to or lower than the pulse stop voltage, the switching control IC 900 stops the switching operation. After that, when the voltage to the terminal 4 becomes higher than the pulse stop voltage, the switching control IC 900 restarts the switching operation. As a result, an output voltage ripple increases to cause an overshoot or undershoot in the terminal 4, and a continuously long burst cycle (intermittent oscillation cycle) is provided.

When the voltage to the terminal 4 is equal to or higher than the pulse stop voltage, the decrease in flyback voltage is detected, and the one-shot circuit 905 operates. The SR flip-flop circuit 912 is set, and a High level signal is output from the terminal 7 to turn ON the switching element 108. After that, when the gate current increases, and the voltage of the terminal 6 becomes higher than the voltage of the terminal 4, a High level signal is output from the comparator 914 to reset the SR flip-flop circuit 912. In this case, the turn-off time count circuit 921 starts to operate at the same time. In the light load operation, a current flows through the photodiode 122a of the photocoupler 122 to turn ON the phototransistor 122b. Accordingly, the voltage input to the terminal 8 decreases to Low level because of the photocoupler 122, and hence the output of the forced turn-off time control circuit 920 is transmitted to the downstream SR flip-flop circuit 912.

(Transformer Driving Waveform in Light Load Operation)

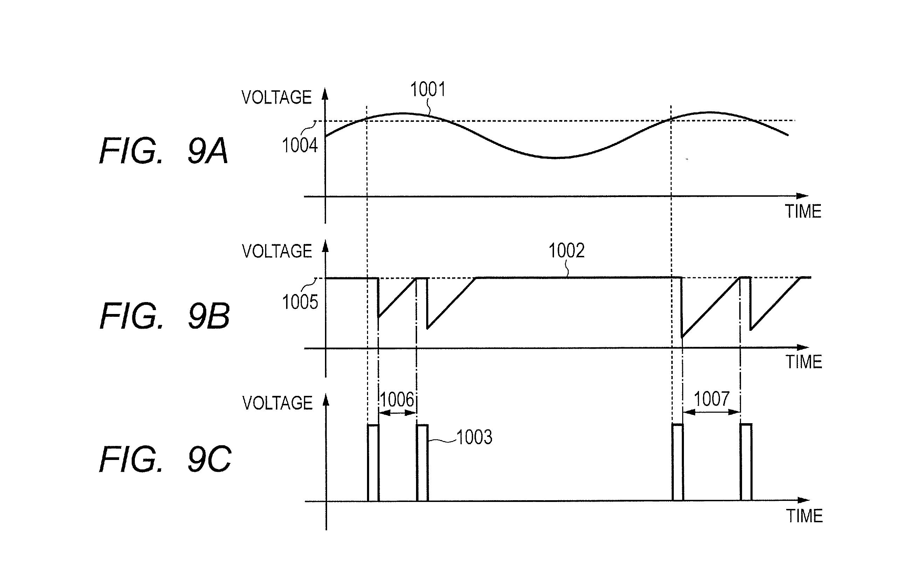

How the transformer driving waveform changes in the above-mentioned circuit operation is shown in FIGS. 9A to 9C. FIGS. 9A to 9C are graphs in which the horizontal axis is time and the vertical axis is voltage. A voltage value represented by 1001 is the feedback voltage value input to the terminal 4. A broken line 1004 represents the pulse stop voltage. A voltage value represented by 1002 is a voltage value output from the low-pass filter 923. A broken line 1005 is the turn-off time setting voltage. A voltage value represented by 1003 is an output voltage of the terminal 7, that is, the gate voltage of the switching element 108.

When the feedback voltage 1001 is lower than the pulse stop voltage 1004, the circuit does not perform the burst operation. When the feedback voltage 1001 equal to or higher than the pulse stop voltage 1004, a High level signal is output from the one-shot circuit 905 to the AND circuit 915, and the AND circuit 915 outputs High level to set the SR flip-flop circuit 912. Then, the circuit starts the burst operation, and the switching control IC 900 outputs one pulse wave from the terminal 7. At the fall timing of the one pulse wave, that is, at the timing at which the voltage of the terminal 6 becomes higher than the voltage of the terminal 4, the forced turn-off time control circuit 920 sets an initial value to the counter of the turn-off time count circuit 921, and starts to count. In this embodiment, the count initial value is changed at every fall of one pulse wave so that the variation in forced turn-off time may be within $\pm 12.5\%$.

The output voltage 1002 of the low-pass filter 923 increases its output in accordance with the count value of the counter. The counter of the turn-off time count circuit 921 continues to count until the output voltage 1002 of the low-pass filter 923 reaches the turn-off time setting voltage 1005. In this period, the burst operation is in the forced OFF state, and no pulse is output. In other words, the comparator 925 outputs a Low level signal and the AND circuit 926 outputs a Low level signal until the output voltage 1002 of the low-pass filter 923 reaches the turn-off time setting voltage 1005. Accordingly, the AND circuit 915 cannot set the SR flip-flop circuit 912, and hence the switching control IC 900 maintains the terminal 7 to Low level.

When the output voltage 1002 of the low-pass filter 923 exceeds the turn-off time setting voltage 1005, the counter stops its operation, and the comparator 925 outputs a High level signal and the AND circuit 926 outputs a High level signal. Accordingly, the AND circuit 915 can set the SR flip-flop circuit 912 in accordance with the input from the one-shot circuit 905. In this way, when the output voltage 1002 of the low-pass filter 923 exceeds the turn-off time setting voltage 1005, the forced OFF state is released, and the next pulse is output from the terminal 7 of the switching control IC 900. This operation continues until the feedback voltage 1001 falls below the pulse stop voltage 1004. The turn-off time setting voltage 1005 can be changed depending on the resistance value of the resistor 125. In this embodiment, for example, the resistance value of the resistor 125 is set so that the count time may be closer to 1/2 of the resonant frequency of the transformer 104.

In other words, as shown in periods 1006 and 1007 of FIG. 9C, a short-cycle turn-off time is roughly determined by the turn-off time setting voltage 1005, and the short-cycle turn-off time varies depending on the variation in the count initial value. Specifically, the depth of fall of the output voltage 1002 of the low-pass filter 923 of FIG. 9B varies depending on the counter initial value varied by the turn-off time count circuit 921. When the fall of the output voltage 1002 of the low-pass filter 923 is small, the time to reach the turn-off time setting voltage 1005 becomes shorter. When the fall is large, the time to reach the turn-off time setting voltage 1005 becomes longer. In this way, the forced turn-off time is controlled by varying the count initial value of the turn-off time count circuit 921.

Even with the configuration in this embodiment, similarly to the first embodiment, vibration noise of the transformer 104 generated in the audible range can be cancelled out in a wide range of frequency band. In this embodiment, the circuit constant is set so that the waveform output has two waves in the burst operation, but, similarly to the first embodiment, the circuit constant may be changed so that the burst waveform output has an even number of waves, such as four waves.

According to this embodiment described above, in the switching power supply, the vibration noise generated from the transformer in the light load operation can be reduced without increasing the size of the transformer and without increasing the loss caused by switching.

Third Embodiment

A third embodiment of the present invention is different from the first and second embodiments in that the short-cycle pulse stop time and the long-cycle pulse stop time are simultaneously varied in the drive pulses for driving the switching power supply. In this case, the long-cycle interval in the burst operation can be regarded also as an interval in which the switching operation of the switching control IC 900 is inactive.

(Circuit Diagram of Power Supply Device)

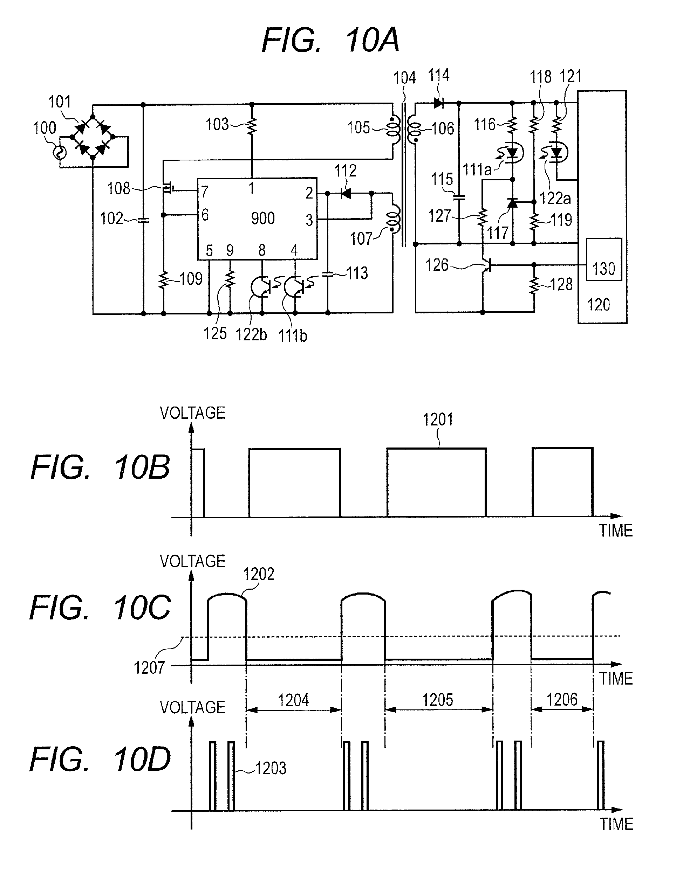

FIG. 10A illustrates a circuit diagram in this embodiment. The same configurations as those described with reference to FIG. 1 of the first embodiment and FIG. 8A of the second embodiment are denoted by the same reference symbols, and description thereof is omitted. The circuit operation other than a transistor 126 and resistors 127 and 128 is the same as the circuit operation described in the second embodiment, and hence description of the operation is also omitted.

FIGS. 10B to 10D are voltage waveform diagrams for describing the operation of the transistor 126 (second change means) in the circuit according to this embodiment. In FIG. 10B, a waveform 1201 represents a base voltage of the transistor 126. In FIG. 10C, a waveform 1202 represents a voltage of the feedback terminal 4 of the switching control IC 900, and a broken line 1207 represents a pulse stop voltage. In FIG. 10D, a waveform 1203 represents a gate voltage of the switching element 108. When the microcomputer 130 included in the load circuit 120 turns ON the transistor 126, a current flows through the photodiode 111a of the photocoupler 111 to turn ON the phototransistor 111b of the photocoupler 111. Then, the voltage of the feedback terminal 4 of the switching control IC 900 decreases. This voltage is sufficiently lower than the pulse stop voltage 1207, and hence the switching control IC 900 cannot turn ON the switching element 108, and the oscillation stops. This corresponds to intervals 1204, 1205, and 1206 of FIG. 10C.

When the microcomputer 130 turns OFF the transistor 126, a current corresponding to the secondary-side output voltage of the power supply circuit flows through the photocoupler 111. At this time, when the voltage of the feedback terminal 4 of the switching control IC 900 is equal to or higher than the pulse stop voltage 1207, the pulse output is restarted. If the pulse stop voltage 1207 is sufficiently low, as shown in FIG. 10D, the pulse is stopped in a period during which the microcomputer 130 turns ON the transistor 126, and the pulse oscillates in a period during which the microcomputer 130 turns OFF the transistor 126. In other words, the microcomputer 130 can control the long-cycle pulse stop time by controlling the length of the turn-on time of the transistor 126 while controlling the turn-off time so that the secondary-side output voltage may fall within a necessary and sufficient range. In addition, as shown in the intervals 1204, 1205, and 1206 of FIG. 10C, the microcomputer 130 can vary the long-cycle pulse stop time by changing each turn-on time interval of the transistor 126. In the interval of controlling the short-cycle turn-off time (interval including two successive pulse waves 1203 of FIG. 10D), the microcomputer 130 turns OFF the transistor 126 to perform the control described in the first and second embodiments.

The timing at which the microcomputer 130 turns ON the transistor 126 may be determined based on the timing stored in advance in a memory (not shown) or the like of the microcomputer 130. Alternatively, the timing at which the microcomputer 130 turns ON the transistor 126 may be determined based on the detection of the rise in voltage of the capacitor 115 (waveform 304 of FIG. 2B).

(Relation between Frequency and Transformer Driving Current in This Embodiment)

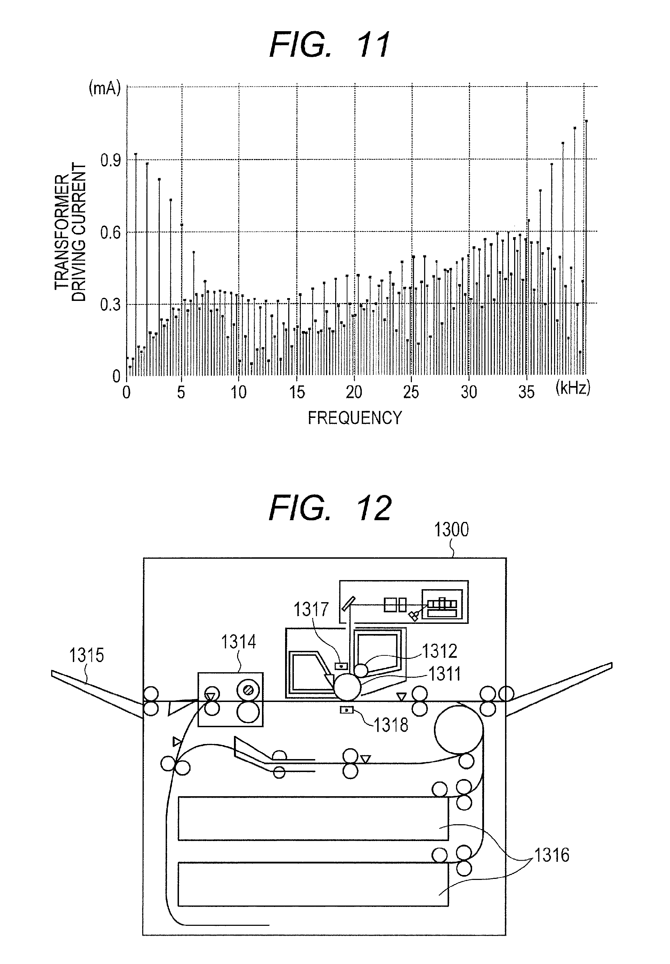

FIG. 11 shows the effect obtained by the configuration of this embodiment. FIG. 11 is a graph showing frequency characteristics of a transformer driving pulse formed in this embodiment. The horizontal axis represents the frequency (kHz) and the vertical axis represents the transformer driving current (mA). By adding the control of varying the long-cycle pulse stop time as in this embodiment in addition to the control of varying the short-cycle pulse stop time, the frequency peak-suppressed band can be widened as compared with the frequency peak-suppressed band of the frequency characteristics of the transformer driving waveform shown in FIGS. 4A to 4C of the first embodiment.

According to this embodiment described above, in the switching power supply, the vibration noise generated from the transformer in the light load operation can be reduced without increasing the size of the transformer and without increasing the loss caused by switching.

Fourth Embodiment

The power supply device described in the first to third embodiments is applicable as, for example, a low voltage power supply of an image forming apparatus, that is, a power supply for supplying electric power to a controller (control unit) or a driving unit such as a motor. Description is now given of a configuration of the image forming apparatus to which the power supply device according to the first to third embodiments is applied.

(Configuration of Image Forming Apparatus)

A laser beam printer is described as an example of the image forming apparatus. FIG. 12 illustrates a schematic configuration of the laser beam printer as an example of an electrophotographic printer. A laser beam printer 1300 includes a photosensitive drum 1311 (image bearing member) on which an electrostatic latent image is to be formed, a charging unit 1317 (charging means) for uniformly charging the photosensitive drum 1311, and a developing unit 1312 (developing means) for developing the electrostatic latent image on the photosensitive drum 1311 with toner. A toner image developed on the photosensitive drum 1311 is transferred by a transfer unit 1318 (transfer means) onto a sheet (not shown) as a recording material supplied from a cassette 1316. The toner image transferred onto the sheet is fixed by a fixing unit 1314 and is discharged to a tray 1315. The photosensitive drum 1311, the charging unit 1317, the developing unit 1312, and the transfer unit 1318 correspond to an image forming unit. The laser beam printer 1300 further includes the power supply device (not shown in FIG. 12) described in the first to third embodiments. The image forming apparatus to which the power supply device in the first to third embodiments is applicable is not limited to the one exemplified in FIG. 12. For example, the image forming apparatus may include multiple image forming units. Alternatively, the image forming apparatus may include a primary transfer unit for transferring the toner image formed on the photosensitive drum 1311 onto an intermediate transfer belt, and a secondary transfer unit for transferring the toner image formed on the intermediate transfer belt onto a sheet.

The laser beam printer 1300 includes a controller (not shown) for controlling an image forming operation of the image forming unit and a sheet conveyance operation. The power supply device described in the first to third embodiments supplies electric power to, for example, the controller. The power supply device in the first to third embodiments supplies electric power also to a driving unit such as a motor for rotating the photosensitive drum 1311 or driving various kinds of rollers for conveying a sheet. In other words, the load 120 in the first to third embodiments corresponds to the controller or the driving unit. The image forming apparatus in this embodiment can reduce power consumption by reducing the load, such as by supplying electric power only to the controller, in the case where the image forming apparatus is in a standby state for realizing power saving (for example, power-saving mode or standby mode). In other words, when the image forming apparatus in this embodiment operates in the power-saving mode, the power supply device described in the first to third embodiments performs the burst operation for the light load operation. As described in the first to third embodiments, an even number of pulse waves, such as two waves, are output in a short cycle in one burst operation. Thus, vibration noise generated from the transformer 104 can be reduced. In this case, as described in the first and second embodiments, pulse waves having short cycles different for each burst cycle may be sequentially output so as to change the turn-off time between two short-cycle pulse waves, with reference to a cycle corresponding to a frequency to be attenuated as the center cycle. Alternatively, as described in the power supply device in the third embodiment, the long-cycle turn-off time after the output of an even number of short-cycle waves such as two waves in one burst operation may be changed.

According to this embodiment described above, in the switching power supply of the image forming apparatus, the vibration noise generated from the transformer in the light load operation can be reduced without increasing the size of the transformer and without increasing the loss caused by switching.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. The power supply device includes a transformer, a switching unit for driving a primary side of the transformer, a control unit for outputting a pulse signal to the switching unit to control a switching operation including a period during which the switching unit is active and a period during which the switching unit is inactive, in order to output predetermined electric power from a secondary side of the transformer, and an output control unit for continuously outputting a pulse signal to the control unit in the period during which the switching unit is active, at a predetermined cycle shorter than the period during which the switching unit is inactive.

**Claims**

1. A power supply device, comprising:

   a transformer in which a primary side and a secondary side are insulated with each other;
   a switching unit for driving the primary side of said transformer;
   a control unit for outputting a pulse signal to said switching unit to control a switching operation including a period during which said switching unit is turned on multiple times, in order to output predetermined electric power from said secondary side of said transformer; and
   an output control unit for continuously outputting a pulse signal to said control unit in the period during which said switching unit is turned on multiple times;
   a first change unit for changing an interval between turn-on times in which the switching unit is turned on multiple times.

2. A power supply device according to claim 1, wherein the first change unit changes the interval based on a resonant frequency of said transformer.

3. A power supply device according to claim 1 or 2, in said switching operation includes a period during the control unit turns the switching unit off without outputting the pulse signals to the switching unit,
   wherein said power supply device further comprises a second change unit for changing the period during which said switching unit is turned off.

4. A power supply device according to any one of claims 1 to 3, further comprising a second change unit for changing the period during which said switching unit is turned off.

5. A power supply device according to any one of claims 1 to 4, wherein said output control unit continuously outputs an even number of pulse signals to the control unit.

6. An image forming apparatus, comprising:

   an image forming unit for forming an image;
   a control unit for controlling an operation of said image forming unit; and
   a power supply according to any one of Claims 1 to 5.

7. An image forming apparatus according to claim 6, wherein the first change unit changes the interval based on a resonant frequency of said transformer.

8. An image forming apparatus according to claim 6 or 7, wherein said switching operation includes a period during the control unit turns the switching unit off without outputting the pulse signals to the switching unit,
   wherein said power supply device further includes a second change unit for changing the period during which said switching unit is turned off.

9. An image forming apparatus according to any one of claims 6 to 8, wherein said output control unit continuously outputs an even number of pulse signals to said control unit.

10. An image forming apparatus according to any one of claims 6 to 9,
    wherein said image forming apparatus is capable of operating in a power-saving mode in which the operation of the image forming unit is stopped to reduce power consumption, and
    wherein when the image forming apparatus is operated in the power-saving mode, in the period during which the switching unit is turned on, said first change unit changes an interval between turn-on times in which the switching unit is turned on multiple times.

11. An image forming apparatus according to any one of Claims 6 to 10, comprising a driving unit for driving said image forming unit,

wherein in a case where said image forming apparatus operates not in the power-saving mode, said power supply supplies a power to said driving unit to drive said image forming unit.

## FIG. 1

## FIG. 2A

## FIG. 2B

# *FIG.* 3

## FIG. 4A

## FIG. 4B

# FIG. 4C

# FIG. 5A

TRANSFORMER
DRIVING VOLTAGE

TIME

# FIG. 5B

SOUND PRESSURE
LEVEL OF TRANSFORMER

dB

-40
-60
-80
-100
-120
-140
-160
-180

5    10    15    20    kHz

FREQUENCY

# FIG. 5C

TRANSFORMER
DRIVING VOLTAGE

TIME

# FIG. 5D

SOUND PRESSURE
LEVEL OF TRANSFORMER

dB

-40
-60
-80
-100
-120
-140
-160
-180

5    10    15    20    kHz

FREQUENCY

## FIG. 6A

## FIG. 6B

# FIG. 7A

# FIG. 7B

# FIG. 8A

# FIG. 8B

FIG. 9A

FIG. 9B

FIG. 9C

EP 2 637 294 A2

EP 2 637 294 A2

FIG. 10A

FIG. 10B

FIG. 10C

FIG. 10D

26

# FIG. 11

# FIG. 12

**EP 2 637 294 A2**

**REFERENCES CITED IN THE DESCRIPTION**

**Patent documents cited in the description**

- JP 3665984 B